# FASCICULE DE BREVET EUROPEEN

(11) **EP 0 493 247 B1**
(45) Date de publication et mention de la délivrance du brevet: **08.11.1995**
(21) Numéro de dépôt: 91403528.2
(22) Date de dépôt: 23.12.1991
(51) Int. Cl.: G01S 17/88

(54) **Dispositif télémétrique pour la détection et la localisation d'objets ou de substances rétrodiffusants**
Anordnung zur Entfernungsmessung, um reflektierende Objekte oder Substanzen zu entdecken und zu orten
Distance measuring device for detecting and localizing reflecting objects or substances

(30) Priorité: 27.12.1990 FR 9016357
(43) Date de publication de la demande: 01.07.1992
(73) Titulaire: SOPELEM-SOFRETEC, F-95872 BEZONS CEDEX (FR)
(72) Inventeur: Pierrard, Philippe, F-91120 Palaiseau (FR); Kasser, Michel, F-94340 Joinville le Pont (FR); Thomas, Olivier, F-92600 Asnieres (FR); Guettier, Denis, F-77410 Charny (FR)
(74) Mandataire: Phélip, Bruno

(56) Documents cités:
- EP-A- 0 117 162
- EP-A- 0 234 164
- EP-A- 0 364 364
- DE-A- 2 826 468
- FR-A- 2 270 600
- FR-A- 2 535 466
- GB-A- 2 071 957
- APPLIED OPTICS vol. 20, no. 24, 15 décembre 1981, pages 4181-4189, New York, US; K. FREDRIKSSON et al.: "Mobile lidar system for environmental probing"

## Description

La présente invention est relative à un dispositif télémétrique pour la détection et la localisation d'objets ou de substances rétrodiffusants, notamment dans le cadre de la détection et la localisation de fumées d'incendies de forêts ou d'aérosols. Plus particulièrement, ce dispositif télémétrique est du type de ceux qui comportent, outre une source laser d'émission d'impulsions répétitives et des moyens de détection d'un faisceau rétrodiffusé reçu, des moyens optiques à tête orientable, cette tête orientable assurant l'orientation en azimut et en site du faisceau émis, ainsi que la réflexion du faisceau reçu sur lesdits moyens de détection.

Des dispositifs télémétriques de ce type sont déjà connus et ont été notamment décrits, dans le brevet FR-2394817 qui fait état d'un dispositif de surveillance comportant une source laser émettant un faisceau vers une cible éventuelle, ce dispositif étant monté sut un socle tournant dont le mouvement commande le balayage azimutal dudit faisceau d'émission. Le faisceau de sortie émis par la source laser et le faisceau de retour réfléchi par une cible sont réfléchis par un même miroir de tête qui oriente ledit faisceau émis dans la direction d'observation et qui défléchit le faisceau de retour sur un télescope intégré audit dispositif, ce télescope renvoyant ledit faisceau après réduction de son diamètre sut un récepteur-détecteur. Ce miroir de tête est également monté pivotant autour d'un axe de basculement fixe par rapport au support et destiné à être sensiblement horizontal en position d'utilisation du dispositif, de façon à permettre l'orientation en site du faisceau émis.

La source laser du dispositif décrit dans ce brevet FR-2314817 émet des impulsions de longueurs d'ondes de 1,064µm. Or, à cette longueur d'onde, le faisceau en sortie de la source laser est dangereux pour l'oeil humain. Il est donc nécessaire de l'élargir sur son trajet optique dans le télémètre jusqu'à ce que sa densité soit suffisamment faible pour ne plus être nuisible. Il est également souhaitable pour conserver une bonne précision sur la direction de tir du télémètre de pouvoir travailler avec un faisceau de sortie collimaté. Les dispositifs télémétriques du type de celui dont fait état le brevet FR-2314817 nécessitent donc des optiques de sortie relativement complexes. C'est là un inconvénient majeur.

On connaît encore par le brevet US-3963347 des dispositifs télémétriques pour la localisation de fumées, brouillards, nuages et analogues, utilisant quant à eux des sources laser dont la longueur d'onde est de 1,54 µm. Les faisceaux émis à cette longueur d'onde, présentent très peu de danger pour l'oeil humain et peuvent donc être utilisés sans être initialement énormément élargis. A cet égard, il est à noter que les optiques d'élargissement et de collimation dont sont munis les dispositifs dont fait état ce brevet US-3963347 (lentilles et éléments réfléchissants) ont pour fonction essentielle de réduire la divergence des faisceaux émis.

Le dispositif dont fait état ce brevet US 3963347 n'est, néanmoins, pas prévu pour balayer en azimut une zone à explorer. Les faisceaux d'émission et de réception n'y transitent aucunement par un miroir de tête commun et la direction de tir n'est modifiable que si l'on intervient sur l'orientation de l'ensemble du dispositif. Or, celui-ci s'avère très difficile à manoeuvrer. Il est donc tout à fait inadapté à la surveillance de lignes d'horizon.

En outre, jusqu'à présent, il n'était pas envisageable d'utiliser des dispositions du type à miroir de tête pour diriger sur une cible un faisceau laser collimaté de petit diamètre; de tels miroirs de tête étaient, en effet, des miroirs classiques à simple dépôt métallique, incapables de supporter des faisceaux à haute densité d'énergie et il aurait été d'un coût exorbitant de remplacer ces miroirs classiques par des miroirs analogues en des matériaux aptes à supporter un tel faisceau collimaté.

Dans une publication Applied Optics, volume 20 de Décembre 1980 (page 41.81 - 41.89) K. Fredriksson et al. ont publié un article intitulé "Mobile lidar system for environmetal probing" dans lequel ils font apparaître la possibilité pour résoudre ce problème d'élargir le faisceau laser d'émission de telle sorte qu'il soit étendu lors de sa réflection au niveau du miroir principal et donc que sa densité d'énergie à cet endroit soit relativement faible.

La présente invention a pour but principal de pallier cet inconvénient et propose à cet effet d'intégrer à une tête de réflexion destinée à assurer l'orientation en azimut et en site d'un faisceau émis ainsi que la réflexion du faisceau reçu sur des moyens de détection, deux miroirs distincts, l'un étant un miroir principal destiné à recevoir le faisceau rétrodiffusé, l'autre étant un miroir secondaire de petites dimensions par rapport audit miroir principal et en un matériau apte à supporter un faisceau d'émission à haute densité d'énergie et réfléchissant parfaitement la longueur d'onde du laser.

Il est à noter que des matériaux de ce type, notamment des matériaux multicouches diélectriques permettant d'obtenir ces propriétés, sont parfaitement connus de l'homme du métier, mais sont économiquement peu accessibles. L'homme du métier excluait jusqu'à présent d'y avoir recours. La solution ci-dessus exposée, retenue par l'invention, permet de bénéficier, à des coûts réduits, des avantages que confèrent les propriétés de ces matériaux.

Un autre aspect important de l'invention tient également en ce que le dispositif qu'elle propose est adapté pour éviter les phénomènes d'éblouissements dont sont souvent l'objet les récepteurs-détecteurs des dispositifs télémétriques. On sait en effet que les densités énergétiques du faisceau reçu sont très faibles comparativement aux intensités du faisceau émis (dynamique de l'ordre de 150 dB), les détecteurs étant calibrés sur une sensibilité correspondant à l'intensité dudit faisceau reçu. Il arrive cependant, que de petites fractions du faisceau émis soient rétrodiffusées après n'avoir parcouru qu'une courte distance sur son trajet optique, par exemple par des poussières, des gouttelettes d'eau ou par diffusion sur les miroirs et hublots du télémètre. Lorsque le trajet optique d'aller du faisceau d'émission traverse ou est proche du trajet de retour du faisceau de réception, il se peut que cette fraction de faisceau rétrodiffusée soit renvoyée sur les optiques de réception, puis sur l'ensemble détecteur, qui se trouve alors ébloui. Cette saturation intense des amplificateurs du récepteur ajoute une imprécision importante pour la mesure des distances moyennes (quelques centaines de mètres). La structure - qui sera décrite plus loin en détail - des dispositifs que propose l'invention permet de pallier cet autre inconvénient.

La présente invention a donc pour objet un dispositif télémétrique pour la détection et la localisation d'objets ou de substances rétrodiffusants, comportant:
- une source d'émission d'un faisceau laser,
- des moyens de détection d'un faisceau rétrodiffusé, et
- des moyens optiques comprenant une tête orientable de réflexion assurant l'orientation en azimut et en site du faisceau émis, ainsi que la déflexion du faisceau reçu sur lesdits moyens de détection,
   ladite tête orientable comportant, solidaires l'un de l'autre, un miroir principal pour la réception du faisceau rétrodiffusé et un miroir secondaire pour l'orientation en azimut et en site du faisceau émis, ledit miroir secondaire étant de petites dimensions par rapport au miroir principal, caractérisé en ce que ledit miroir secondaire est placé sur le faisceau laser à la sortie de la source sans l'intermédiaire d'une optique d'augmentation de divergence ou d'élargissement du faisceau, et qu'il n'est pas détérioré par des faisceaux d'émission ayant une densité énergétique de 100 MW/cm² et a un coefficient de réflexion élevé à la longueur d'onde de la source laser.

Avantageusement, le miroir secondaire est en matériau au moins apte à supporter un faisceau d'émission ayant une densité énergétique de quelques centaines de MW/cm², et des cadences de tir élevées (supérieures à 10 Hz), notamment en un matériau à multicouches diélectriques.

De façon avantageuse encore, les moyens optiques comportent, en plus de la tête orientable, des moyens qui renvoient le faisceau émis par la source laser sur le miroir secondaire et qui renvoient le faisceau rétrodiffusé reçu par le miroir principal sur les moyens de détection, ces moyens étant agencés et dimensionnés de façon à ce que, si une fraction du faisceau d'émission est rétrodiffusée sur son trajet optique avant d'avoir parcouru une distance suffisante pour que sa densité énergétique à la réception soit suffisamment faible pour ne plus être nuisible pour les moyens détecteurs, cette fraction ne puisse être renvoyée sur lesdits moyens détecteurs. La distance limite à parcourir au-delà de laquelle la densité énergétique du faisceau rétrodiffusé est suffisamment faible est habituellement de quelques mètres au-delà du hublot de sortie.

De préférence, la source laser émet un faisceau de longueurs d'onde de 1,54 µ. Le miroir principal peut être un miroir classique à dépôt métallique, le ou les éléments optiques assurant le repliement du faisceau émis par la source laser sur la tête de réflexion peuvent être des éléments de petites dimensions comparées à celles du miroir principal et en des matériaux aptes à supporter un faisceau d'émission à haute densité énergétique, notamment des miroirs en un matériau analogue à celui du miroir secondaire de la tête de réflexion.

De préférence, ce dispositif télémétrique comporte une partie support par rapport à laquelle la tête de réflexion est montée pivotante autour d'un axe destiné à être sensiblement vertical lorsque ledit dispositif est en position d'utilisation, ladite tête étant associée à des moyens moteurs l'entraînant en pivotement de façon à permettre au faisceau d'émission d'effectuer un balayage panoramique autour dudit axe. La tête de réflexion peut être également apte à basculer autour d'un axe de ladite partie support destiné à être sensiblement horizontal lorsque ledit dispositif est en position d'utilisation, de façon à permettre au faisceau d'émission d'effectuer un balayage en site par rapport à une ligne d'horizon. La source laser et/ou les moyens de détection sont avantageusement fixes par rapport à la partie support dudit dispositif par rapport à laquelle la tête de réflexion est montée mobile.

Les moyens optiques peuvent comporter un télescope du type Cassegrain destiné à assurer le renvoi du faisceau rétrodiffusé reçu de la tête de réflexion jusqu'aux moyens de détection.

Dans un mode de réalisation préférentiel, le miroir principal et le miroir secondaire sont sensiblement coaxiaux. Les moyens optiques peuvent comporter un miroir de renvoi du faisceau émis par la source laser sur le miroir secondaire, ledit miroir de renvoi étant de dimensions supérieures aux dimensions du faisceau laser émis. Avantageusement alors, les dimensions d'un miroir de renvoi sont telles que, si une fraction du faisceau d'émission est rétrodiffusée au-delà dudit miroir avant d'avoir parcouru sur son trajet optique une distance suffisante pour que sa densité énergétique soit suffisamment faible pour ne plus être nuisible pour les moyens détecteurs, cette fraction est arrêtée par ledit miroir si elle se trouve diriger vers les moyens détecteurs.

Le télescope peut être fixe par rapport à la partie support dudit dispositif.

Dans un autre mode de réalisation avantageux, la tête de réflexion est montée sur une monture azimutale qui est apte à pivoter par rapport à l'axe du télescope, le miroir secondaire peut être monté excentré par rapport au miroir principal; les surfaces de réception et d'émission de la tête de réflexion peuvent être avantageusement totalement séparées l'une de l'autre.

Un autre objet de l'invention est encore l'utilisation d'un tel dispositif télémétrique pour la détection et la localisation de fumées d'incendies de forêts ou d'aérosols.

La description qui suit de plusieurs modes de réalisation de l'invention est purement illustrative et non limitative. Elle doit être lue en regard des dessins annexés, sur lesquels:
- La figure 1 est une vue en coupe d'un dispositif télémétrique conforme à un premier mode de réalisation de l'invention;
- La figure 2 est une vue selon la ligne II-II de la figure 1;
- La figure 3 est une vue en coupe semblable à celle de la figure 1 d'un dispositif télémétrique conforme à un deuxième mode de réalisation de l'invention;
- La figure 4 enfin est une vue en coupe selon la ligne IV-IV de la figure 3.

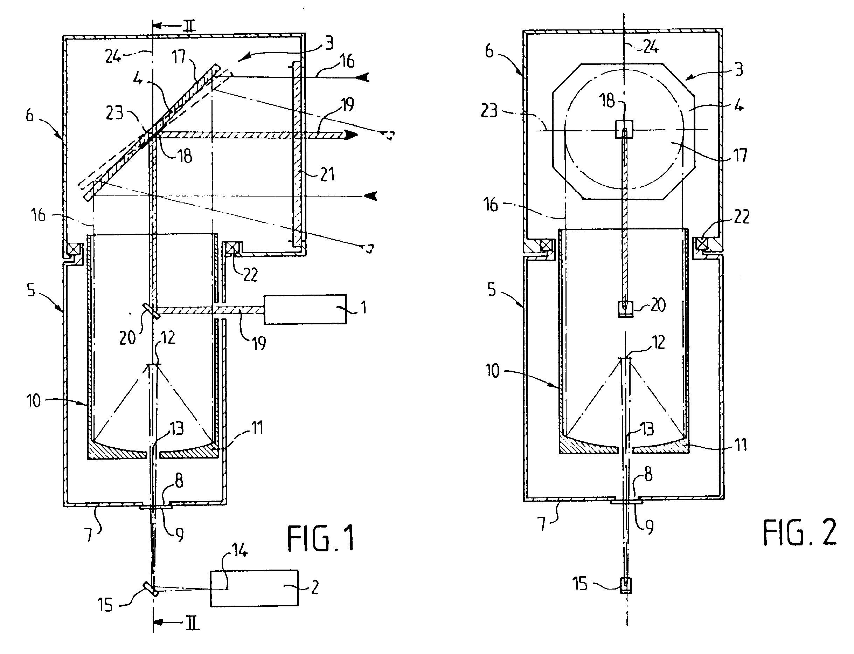

On voit sur les figures 1 et 2 qu'un dispositif télémétrique conforme à un premier mode de réalisation particulier de l'invention comporte essentiellement une source laser 1 et un détecteur 2 associés à des moyens optiques 3 à tête réfléchissante 4 à double miroir. Les moyens optiques 3 sont montés à l'intérieur d'un bâti comportant une tourelle principale 5 et une monture azimutale 6 montée pivotante sur ladite tourelle principale 5. Cette tourelle 5 est solidaire d'un support (non représenté) sur lequel la source laser 1 et le détecteur 2 sont intégrés fixement.

La tourelle 5 a principalement la forme d'un parallélépipède rectangle creux ouvert à une de ses extrémités pour déboucher dans la monture azimutale 6 et obturé au niveau de sa base opposée à sa monture azimutale 6 par un fond 7. Ce fond 7 est percé par un orifice 8 fermé par une optique transparente 9 traitée anti-reflets à la longueur d'onde du laser, ladite optique 9 et ledit orifice 8 étant de contours circulaires et étant centrés sur l'axe de rotation de la monture azimutale 6. Dans la tourelle 5 est disposé un télescope du type Cassegrain 10 à corps cylindrique allongé dont l'axe est confondu avec l'axe de rotation 24 de la monture azimutale 6. Ce télescope 10 débouche à une de ses extrémités au niveau de la monture azimutale 6 avec un diamètre d'ouverture d'environ 200 millimètres et comprend au niveau de son autre extrémité, vers le fond 7, un miroir primaire 11 parabolique associé à un petit miroir convexe (ou éventuellement plan) 12 secondaire disposé entre l'extrémité du télescope 10 qui est opposée au fond 7 et ledit miroir 11. Le miroir parabolique 11 est lui-même traversé axialement par un orifice 13, les centres de cet orifice 13, du miroir 12 et du miroir 11 étant disposés sur l'axe de pivotement 24 de la monture azimutale 6.

Ce télescope 10 est associé à un miroir plan 15 disposé hors de la tourelle 5, centré sur l'axe de pivotement 24 de la monture azimutale 6 et orienté à 45° par rapport audit axe. Ce télescope 10 est destiné à recevoir le faisceau 16 que lui renvoie la tête 4 à double miroir sur laquelle il se réfléchit avec un champ de vision d'environ deux milliradians, ce faisceau 16 étant réfléchi, avec réduction de diamètre par le jeu des miroirs 11 et 12, à travers l'orifice 13 et l'optique 9, sur le miroir plan 15 qui les renvoie sur le détecteur 2, au niveau duquel se trouve le foyer image 14 de l'ensemble optique constitué par le télescope 10 et le miroir plan 15.

La tête 4 comporte un miroir plan principal 17 sur lequel est monté un miroir secondaire plan 18. Le miroir 17 est un miroir classique à dépôt métallique. Le miroir secondaire 18 est centré avec ledit miroir principal 17 sur l'axe de pivotement 24 de la monture azimutale 6. Ce miroir 18 est de petites dimensions (quelques centimètres carrés) par rapport à celles du miroir principal 17 (plusieurs centaines de centimètres carrés). Ce miroir 18 est constitué d'un substrat en un matériau optique apte à recevoir un traitement multicouches diélectriques de haute réflectivité à la longueur d'onde d'émission et ayant une bonne tenue au flux, ce traitement multicouches diélectriques étant, par exemple, apte à supporter des faisceaux de forte intensité, et par exemple des faisceaux de 10 mm de diamètre et de densité d'énergie supérieure à 300 MW/cm².

Ce petit miroir 18 est destiné à recevoir les faisceaux émis par la source laser 1 pour les renvoyer selon la direction de tir du dispositif télémétrique. La source laser 1 est disposée à l'extérieur de la tourelle 5 et de la tête azimutale 6. Elle envoie un faisceau d'émission 19 sur un miroir 20 disposé à l'intérieur du télescope 10 et centré sur l'axe de la tête azimutale, du côté opposé au miroir 11 par rapport au miroir 12, ce miroir plan 20, orienté à 45° par rapport à l'axe 24, renvoyant le faisceau 19 sur le petit miroir secondaire 18. Aucune optique de correction de divergence ou d'élargissement du diamètre du faisceau d'émission n'est intercalé sur le trajet optique du faisceau 19. On pourrait néanmoins, sans sortir pour autant du cadre de l'invention, associer aux moyens optiques 3 diverses optiques intercalées sur le trajet du faisceau 19, par exemple des optiques destinées à diminuer la divergence du faisceau d'émission. Le miroir 20 est également en un matériau apte à supporter de fortes densités d'énergie et notamment celles du faisceau laser 19 en sortie de la source 1. Par ailleurs, ce miroir 20 est de dimension supérieure au diamètre du faisceau 19 et plus particulièrement de dimensions telles que si une fraction du faisceau 19 est rétrodiffusée, par exemple par des poussières ou aérosols dans l'atmosphère, avant d'avoir parcouru sur son trajet optique une distance limite, fonction de la divergence dudit faisceau 19, au-delà de laquelle l'intensité du faisceau est suffisamment faible pour ne pas nuire au détecteur, cette fraction rétrodiffusée se trouve arrêtée par le miroir 20 avant d'atteindre le détecteur 2. Par exemple, dans le cas d'un faisceau d'environ 10 mm de diamètre, un miroir 20 de 28 mm de diamètre orienté à 45° permet de protéger les moyens récepteurs des rétrodiffusions qui interviennent dans leur champ de réception à des distances optiques dudit miroir 20 inférieures à 2,5 m. Ceci permet par conséquent d'éviter les phénomènes d'éblouissement du détecteur 2 provenant des tous premiers mètres du trajet optique qui est calibré pour détecter les faisceaux rétrodiffusés de retour, qui sont des faisceaux de très faibles intensités lumineuses. Le dispositif optique n'exclut pas l'utilisation d'un contrôle électronique à gain variable dans le temps de l'amplificateur de réception. Ce contrôle permettrait de s'affranchir des rétrodiffusions parasites provenant des aérosols présents dans l'atmosphère jusqu'à des distances de plus de 100 mètres, distance à partir de laquelle le gain est maximal.

Les moyens de détection 2 comportent un photodétecteur du type In-As-Ga, éventuellement refroidi, associé à une électronique d'intégration ayant un temps d'intégration de l'ordre de la microseconde, c'est-à-dire relativement long si on le compare aux temps d'intégration classiquement utilisés pour des dispositifs analogues. Les moyens d'intégration de cette électronique sont destinés à intégrer les photons rétrodiffusés reçus dans une tranche temporelle d'analyse qui correspond à la plage de distance que l'on désire observer. L'allongement important de la constante de temps que propose l'invention permet d'intégrer, dans chaque tranche temporelle analysée, un plus grand nombre de photons rétrodiffusés. On démontre facilement que l'albédo apparent des nuages observé en est considérablement augmenté (albédo de l'ordre de 1%), de telle sorte que la détection de nuage ou de fumée naissante peu dense, dont la trace optique est essentiellement représentée par de la vapeur d'eau condensée, est obtenue avec une probabilité maximale. Le rapport signal/bruit au niveau du détecteur est très élevé comparé à celui obtenu avec une bande passante classique de l'ordre de 15 à 30 Mhz.

La perte de précision sur la distance que cet allongement important que la constante de temps pourrait entraînée est compensée en partie par un traitement numérique approprié du signal analogique échantillonné par un convertisseur analogique-numérique, ainsi que par la répétition des tirs à cadence élevée sur un même nuage ou la même fumée. Cette répétition permet en effet un traitement statistique qui, si besoin est, améliore la localisation de l'écho.

La monture azimutale 6 comporte, en regard de la face de réflexion du miroir 17 de la tête 4, un hublot 21, par exemple auto-nettoyant qui a été représenté sur les figures 1 et 2 sensiblement perpendiculaire aux faisceaux d'émission, mais qui peut être également légèrement incliné d'un angle légèrement supérieur au demi débattement maximal du miroir de tête, par rapport à ceux-ci pour éviter qu'une fraction des faisceaux d'émission ne se trouve réfléchie par le verre du hublot sur le miroir principal 17. Cette monture d'azimutale est montée, par rapport à la tourelle 5, sur des galets de pivotement 22. En son intérieur, la tête de réflexion 4 est elle-même montée pivotante autour d'un axe 23 destiné à être, en usage normal du dispositif télémétrique, sensiblement en position horizontale, la tête de réflexion 4 pouvant basculer par rapport à cet axe 23 environ d'un angle de - 10° à un angle de + 5° par rapport à une ligne d'horizon. Cet axe de pivotement 23 est concourant avec l'axe de rotation de la monture azimutale 6 de sorte qu'un basculement de la tête de réflexion 4 autour de son axe 23 n'entraîne aucun déplacement relatif des faisceaux 16 et 19 par rapport au centre des miroirs 17 et 18.

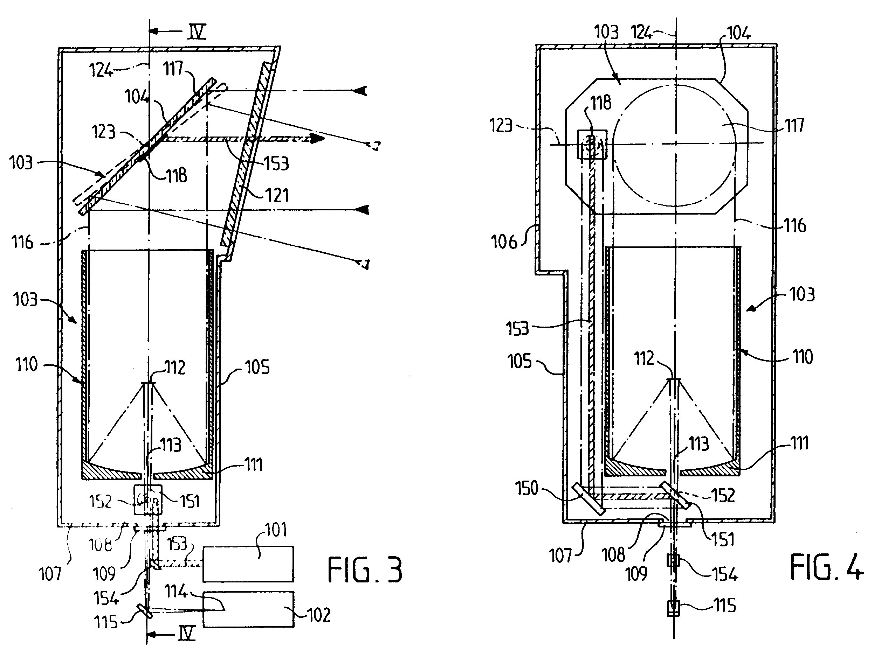

On a repris, pour les éléments du dispositif télémétrique représenté sur les figures 3 et 4 que l'on retrouve dans le dispositif télémétrique qui vient d'être décrit, les mêmes nombres de référence augmentées de 100.

On voit sur ces figures 3 et 4 qu'un dispositif télémétrique conforme à un deuxième mode de réalisation de l'invention comprend une source laser 101, un détecteur 102, une tête 104 à double miroir montée pivotante en basculement à l'intérieur d'une monture azimutale 106 qui est dans ce mode de réalisation solidaire d'une tourelle 105 dans laquelle est montée un télescope 110 à miroirs concave et convexe 111 et 112. Le miroir concave 111 est traversé par un orifice 113, l'ensemble de ce télescope 110 étant associé à un miroir de renvoi 115 disposé hors de la tourelle 105 et destiné à renvoyer les faisceaux de réception sortant du télescope 110 sur le détecteur 102.

La tête de réflexion 104 comporte un miroir principal 117 sur lequel est monté un miroir secondaire 118 en un matériau apte à supporter un faisceau d'émission à haute densité d'énergie. Ce miroir secondaire 118 est dans ce mode de réalisation excentré par rapport à l'axe du miroir principal 117 et du télescope 110, mais est sensiblement centré sur l'axe de basculement en site de la tête de réflexion 104. La surface de réflexion du miroir 117, représentée en traits mixtes sur la figure 4, est totalement séparée de la surface du miroir 118. Ce miroir 118 fait face, à un miroir de renvoi 150 disposé vers une arête du fond 107 de la tourelle 105, les centres de ces deux miroirs 150 et 118 étant disposés sur un axe parallèle à la direction selon laquelle s'étend le télescope 110 et extérieur audit télescope 110. Ces miroirs 118 et 150 sont associés à un deuxième miroir de renvoi 151 disposé entre le fond 107 et le miroir concave 111 du télescope 110, juste au niveau du verre 109, ce miroir étant percé en son centre d'un orifice 152 centré sur l'axe du télescope 110. Cet orifice 152 permet le passage à travers le miroir 151 du faisceau de réception 116 renvoyé par le miroir convexe 112. Le miroir de renvoi 151 reçoit le faisceau 153 émis par la source laser et réfléchi à 45° par un miroir 154 dont les dimensions correspondent sensiblement aux dimensions dudit faisceau laser 153, ce miroir 154 renvoyant ledit faisceau 153 sur le miroir 151 à travers l'optique 109, la trajectoire du faisceau 153 après réflexion sur le miroir 154 et la trajectoire du faisceau d'émission renvoyée par le miroir convexe 112, entre le miroir 151 et le miroir 154, étant parallèle et côte à côte Le faisceau 153 est ensuite renvoyé du miroir 151 sur le miroir 150, puis du miroir 150 sur le miroir d'émission 118. Etant donné le mouvement tournant de la tourelle 105, et le léger décalage de la portion du faisceau 153 renvoyée par le miroir 154 sur le miroir 151 par rapport à l'axe de pivotement 124 de la tourelle 105, la trace du faisceau 153 sur les miroirs 118, 150 et 151 est circulaire. Les trajectoires des faisceaux d'émission et des faisceaux de réception sont suffisamment décalées les unes des autres pour qu'une fraction du faisceau d'émission rétrodiffusée, avant d'avoir parcouru sur son trajet optique une distance suffisante pour ne plus être nuisible pour le détecteur 102, ne soit pas renvoyée sur ledit détecteur 102.

Au cours du mouvement de pivotement de la tourelle 105 sur son axe, la distance optique au-delà du miroir 154 en-deçà de laquelle les champs des faisceaux d'émission et de réception sont suffisamment distincts pour qu'une fraction rétrodiffusée du faisceau d'émission ne soit pas renvoyée sur les moyens détecteurs, oscille entre 2,5 et 15 mètres.

L'ensemble tourelle-monture azimutale est dans ce mode de réalisation monté pivotant sur une partie support (non représentée) qui porte la source laser 101 et le détecteur 102, autour de l'axe 124 du télescope 110, lequel axe 123 passe par le centre du miroir 117, le centre du diaphragme 114, et le centre du verre 109. L'impact du faisceau 153 sur le miroir 151 est décalé par rapport audit axe de pivotement de l'ensemble tourelle-monture azimutale et décrit donc, au fut et à mesure du pivotement de la tourelle 105, un cercle sur le miroir 151 autour de l'orifice 152. Par le jeu des renvois des miroirs 150 et 151 et du miroir 118, l'impact du faisceau d'émission sur ledit miroir 118 décrit également un cercle sur celui-ci autour de son centre disposé sur l'axe de basculement 123 de la tête de réflexion 104.

Les nombres de référence, insérés après les caractéristiques techniques mentionnées dans les revendications, ont pour seul but de faciliter la compréhension de ces dernières et n'en limitent aucunement la portée.

## Revendications

1. Dispositif télémétrique pour la détection et la localisation d'objets ou de substances rétrodiffusants, comportant:
- une source (1, 101) d'émission d'un faisceau laser,
- des moyens de détection (2, 102) d'un faisceau rétrodiffusé, et
- des moyens optiques (3, 103) comprenant une tête orientable de réflexion (4, 104) assurant l'orientation en azimut et en site du faisceau émis (19, 153), ainsi que la déflexion du faisceau reçu (16, 116) sur lesdits moyens de détection (2, 102), ladite tête orientable (4, 104) comportant, solidaires l'un de l'autre, un miroir principal (17, 117) pour la réception du faisceau rétrodiffusé et un miroir secondaire (18, 118) pour l'orientation en azimut et en site du faisceau émis, ledit miroir secondaire étant de petites dimensions par rapport au miroir principal
caractérisé en ce que ledit miroir secondaire (18, 118) est placé sur le faisceau laser à la sortie de la source sans l'intermédiaire d'une optique d'augmentation de divergence ou d'élargissement du faisceau, et qu'il n'est pas détérioré par des faisceaux d'émission ayant une densité énergétique de 100 MW/cm² et a un coefficient de réflexion élevé à la longueur d'onde de la source laser (1, 101).

2. Dispositif selon la revendication 1, caractérisé en ce que le miroir secondaire (18, 118) est en un matériau à multicouches diélectriques.

3. Dispositif selon l'une quelconque des revendications précédentes, caractérisé en ce que les moyens optiques (3, 103) comportent des moyens qui renvoient le faisceau émis par la source laser (1, 101) sur le miroir secondaire (18, 118) et qui renvoient le faisceau rétrodiffusé reçu par le miroir principal (17, 117) sur les moyens de détection (2, 102), et en ce que ces moyens sont agencés et dimensionnés de façon à ce que, si une fraction du faisceau d'émission est rétrodiffusée sur son trajet optique avant d'avoir parcouru une distance suffisante pour que sa densité énergétique soit suffisamment faible pour ne plus être nuisible pour les moyens détecteurs (2, 102), cette fraction ne puisse être renvoyée sur lesdits moyens détecteurs (2, 102).

4. Dispositif selon l'une quelconque des revendications précédentes, caractérisé en ce que la source laser émet des faisceaux de longueur d'onde supérieure à 1,4 µm, notamment de longueur d'onde égale à 1,54 µm.

5. Dispositif selon l'une quelconque des revendications précédentes, caractérisé en ce que les moyens optiques (3, 103) comportent un ou des éléments optiques (20; 150, 151, 154) assurant le repliement des faisceaux émis par la source laser (2,102) sur la tête de réflexion (4, 104), qui sont des éléments de petites dimensions comparées à celles du miroir principal (17,117) et en des matériaux aptes à supporter des faisceaux d'émission à haute densité énergétique.

6. Dispositif selon la revendication précédente, caractérisé en ce que le ou les éléments optiques (20; 150, 151, 154) assurant le repliement du faisceau émis par la source laser (1, 101) sur le miroir secondaire (18, 118) sont des miroirs en un matériau analogue à celui du miroir secondaire (18, 118) de la tête de réflexion (4, 104).

7. Dispositif selon l'une quelconque des revendications précédentes, caractérisé en ce qu'il comprend une partie support par rapport à laquelle la tête de réflexion (4, 104) est montée pivotante autour d'un axe destiné à être sensiblement vertical lorsque ledit dispositif est en position d'utilisation, ladite tête étant associée à des moyens moteurs l'entraînant en pivotement de façon à permettre aux faisceaux d'émission d'effectuer un balayage panoramique autour dudit axe.

8. Dispositif selon la revendication précédente, caractérisé en ce que la tête de réflexion (4, 104) est également apte à basculer autour d'un axe de ladite partie support destiné à être sensiblement horizontal lorsque ledit dispositif est en position d'utilisation de façon à permettre au faisceau d'émission d'effectuer un balayage en site par rapport à une ligne d'horizon.

9. Dispositif selon l'une quelconque des revendications 7 ou 8, caractérisé en ce que la source laser (1, 101) et/ou les moyens de détection (2, 102) sont fixes par rapport à la partie support dudit dispositif par rapport à laquelle la tête de réflexion (4, 104) est montée mobile.

10. Dispositif selon l'une quelconque des revendications précédentes, caractérisé en ce que les moyens optiques (3, 103) comportent un télescope (10, 110) du type Cassegrain destiné à assurer le renvoi du faisceau rétrodiffusé reçu de la tête de réflexion (4,104) jusqu'aux moyens de détection (2, 102).

11. Dispositif selon l'une quelconque des revendications précédentes, caractérisé en ce que miroir principal (17) et le miroir secondaire (18) sont sensiblement coaxiaux.

12. Dispositif selon l'une quelconque des revendications précédentes, caractérisé en ce que les moyens optiques (3, 103) comportent un miroir (20) de renvoi du faisceau émis par la source laser (1, 101) sur le miroir secondaire (18), ledit miroir de renvoi (20) étant de dimensions supérieures aux dimensions du faisceau laser émis.

13. Dispositif selon les revendications 4 et 12, prises en combinaison, caractérisé en ce que les dimensions d'un miroir de renvoi (20) sont telles que, si une fraction du faisceau d'émission est rétrodiffusée au-delà dudit miroir (20) avant d'avoir parcouru sur son trajet optique une distance suffisante pour que sa densité énergétique soit suffisamment faible pour ne plus être nuisible pour les moyens détecteurs (2), cette fraction est arrêtée par ledit miroir (20) si elle se trouve diriger vers les moyens détecteurs.

14. Dispositif selon la revendication 9 prise seule ou en combinaison avec l'une quelconque des revendications précédentes, caractérisé en ce que le télescope (10) est fixe par rapport à la partie support dudit dispositif.

15. Dispositif selon la revendication 14, caractérisé en ce que la tête de réflexion est montée sur une monture azimutale (8) qui est apte à pivoter par rapport à l'axe du télescope (10).

16. Dispositif selon l'une quelconque des revendications précédentes, caractérisé en ce que le miroir secondaire (118) est monté excentré par rapport au miroir principal (117).

17. Dispositif selon la revendication précédente, caractérisé en ce que les surfaces de réception et d'émission de la tête de réflexion (104) sont sans intersection.

18. Dispositif selon l'une quelconque des revendications précédentes, caractérisé en ce que les moyens de détection comportent des moyens électroniques d'intégration des photons rétrodiffusés reçus qui ont une constante de temps de l'ordre de quelques centaines de nanosecondes ou de la microseconde.

19. Utilisation du dispositif selon les revendications 1 à 18 pour la détection et la localisation de fumées d'incendies de forêts.

## Patentansprüche

1. Telemetrievorrichtung zum Erkennen und Lokalisieren von rückstreuenden Objekten und Substanzen, mit:
- einer einen Laserstrahl emittierenden Quelle (1, 101),
- einer Einrichtung (2, 102) zum Erkennen eines rückgestreuten Strahls, und
- einer optischen Einrichtung (3, 103) mit einem ausrichtbaren Reflexionskopf (4, 104), der die Ausrichtung des emittierten Strahls (19, 153) im Azimut und in der Höhe sowie das Ablenken des empfangenen Strahls (16, 116) auf die Erkennungseinrichtung (2, 102) bewirkt, wobei der einstellbare Kopf (4, 104), in gegenseitiger fester Verbindung miteinander, einen Hauptspiegel (17, 117) zum Empfangen des rückgestreuten Strahls und einen Sekundärspiegel (18, 118) zum Ausrichten des emittierten Strahls im Azimut und in der Höhe aufweist, und wobei der Sekundärspiegel in bezug auf den Hauptspiegel kleiner bemessen ist,
dadurch gekennzeichnet, daß
- der Sekundärspiegel (18, 118) am Ausgang der Quelle ohne Zwischenfügung einer Divergenzverstärkungs- oder Strahlaufweitungsoptik im Laserstrahlweg angeordnet ist, und daß er durch Ausgangsstrahlen mit einer Energiedichte von 100 MW/cm² nicht beschädigt wird und einen hohen Reflexionskoeffizienten bei der Wellenlänge der Laserquelle (1, 101) aufweist.

2. Vorrichtung nach Anspruch 1, dadurch gekennzeichnet, daß der Sekundärspiegel (18, 118) aus. einem Material besteht, das aus mehreren dielektrischen Schichten gebildet ist.

3. Vorrichtung nach einem der vorhergehenden Ansprüche, dadurch gekennzeichnet, daß die optische Einrichtung (3, 103) eine Einrichtung aufweist, die den von der Laserquelle (1, 101) emittierten Strahl auf den Sekundärspiegel (18, 118) lenkt und die den von dem Hauptspiegel (17, 117) empfangenen zurückgestreuten Strahl auf die Erkennungseinrichtung (2, 102) lenkt, und daß diese Einrichtung derart angeordnet und bemessen ist, daß, wenn ein Teil des Ausgangsstrahls auf seinem optischen Weg rückgestreut wird, bevor er eine Strecke zurückgelegt hat, die ausreicht, um eine derart ausreichende Abschwächung der Energiedichte des Strahls zu bewirken, daß dieser die Erkennungseinrichtung (2, 102) nicht mehr beschädigen kann, dieser Teil nicht auf die Erkennungseinrichtung (2, 102) zurückgestrahlt werden kann.

4. Vorrichtung nach einem der vorhergehenden Ansprüche, dadurch gekennzeichnet, daß die Laserquelle Strahlen mit einer Wellenlänge über 1,4 µm, insbesondere mit einer Wellenlänge von 1,54 µm, emittiert.

5. Vorrichtung nach einem der vorhergehenden Ansprüche, dadurch gekennzeichnet, daß die optische Einrichtung (3, 103) ein oder mehrere optische Elemente (20; 150, 151, 154) aufweist, die die Umlenkung der von der Laserquelle (1, 101) emittierten Strahlen auf den Reflexionskopf (4; 104) bewirken, wobei die Elemente im Vergleich mit denjenigen des Hauptspiegels (17, 117) kleine Abmessungen aufweisen und aus Materialien bestehen, die in der Lage sind, Ausgangsstrahlen mit hoher Energiedichte standzuhalten.

6. Vorrichtung nach dem vorhergehenden Anspruch, dadurch gekennzeichnet, daß das oder die optischen Elemente (20; 150, 151, 154), die die Umlenkung des von der Laserquelle (1, 101) emittierten Strahls auf den Sekundärspiegel (18, 118) bewirken, Spiegel sind, die aus einem zu dem Material des Sekundärspiegels (18, 118) des Reflexionskopfs (4, 104) analogen Material bestehen.

7. Vorrichtung nach einem der vorhergehenden Ansprüche, dadurch gekennzeichnet, daß sie ein Stützteil aufweist, in bezug auf welches der Reflexionskopf (4, 104) um eine im wesentlichen vertikale Achse schwenkbar montiert ist, wenn sich die Vorrichtung in der Gebrauchsposition befindet, wobei der Kopf mit einer Motoreinrichtung verbunden ist, die diesen derart schwenkend antreibt, daß die Ausgangsstrahlen eine Panorama-Abtastung um die Achse durchführen können.

8. Vorrichtung nach dem vorhergehenden Anspruch, dadurch gekennzeichnet, daß der Reflexionskopf (4, 104) ferner in der Lage ist, bei einer in der Gebrauchsposition befindlichen Vorrichtung, derart um eine im wesentlichen horizontale Achse des Stützteils zu kippen, daß der Ausgangsstrahl eine Höhenabtastung in bezug auf eine Horizontale durchführen kann.

9. Vorrichtung nach einem der Ansprüche 7 oder 8, dadurch gekennzeichnet, daß die Laserquelle (1, 101) und/oder die Erkennungseinrichtung (2, 102) in bezug auf das Stützteil, auf welchem der Reflexionskopf (4, 104) bewegbar montiert ist, fixiert sind.

10. Vorrichtung nach einem der vorhergehenden Ansprüche, dadurch gekennzeichnet, daß die optische Einrichtung (3, 103) ein Cassegrain-Teleskop (10, 110) aufweist, das das Zurückstrahlen des vom dem Reflexionskopf (4, 104) empfangenen rückgestreuten Strahls bis zur Erkennungseinrichtung (2, 102) gewährleistet.

11. Vorrichtung nach einem der vorhergehenden Ansprüche, dadurch gekennzeichnet, daß der Hauptspiegel (17) und der Sekundärspiegel (18) im wesentlichen koaxial sind.

12. Vorrichtung nach einem der vorhergehenden Ansprüche, dadurch gekennzeichnet, daß die optische Einrichtung (3, 103) einen Spiegel (20) zum Zurückstrahlen des von der Laserquelle (1, 101) emittierten Strahls auf den Sekundärspiegel (18) aufweist, wobei die Abmessungen des Rückstrahlspie gels (20) größer sind als die Abmessungen des emittierten Laserstrahls.

13. Vorrichtung nach der Ansprüche 4 und 12 in Kombination miteinander, dadurch gekennzeichnet, daß die Abmessungen eines Rückstrahlspiegels (20) derart sind, daß, wenn ein Teil des Ausgangsstrahls über den Spiegel (20) hinaus rückgestreut wird, bevor er auf seinem optischen Weg eine Strecke zurückgelegt hat, die ausreicht, um eine derart ausreichende Abschwächung seiner Energiedichte zu bewirken, daß dieser die Erkennungseinrichtung (2) nicht mehr beschädigen kann, dieser Teil durch den Spiegel (20) blockiert wird, wenn er auf die Erkennungseinrichtung gerichtet ist.

14. Vorrichtung nach Anspruch 9, entweder allein oder in Kombination mit einem der vorhergehenden Ansprüche, dadurch gekennzeichnet, daß das Teleskop (10) in bezug auf das Stützteil der Vorrichtung fixiert ist.

15. Vorrichtung nach Anspruch 14, dadurch gekennzeichnet, daß der Reflexionskopf auf einer azimutalen Montur (8) befestigt ist, der in bezug auf die Achse des Teleskops (20) schwenkbar ist.

16. Vorrichtung nach einem der vorhergehenden Ansprüche, dadurch gekennzeichnet, daß der Sekundärspiegel (118) in bezug auf den Hauptspiegel (117) exzentrisch angebracht ist.

17. Vorrichtung nach dem vorhergehenden Anspruch, dadurch gekennzeichnet, daß die Empfangs- und Emissionsflächen des Reflexionskopfs (104) keine Überschneidung aufweisen.

18. Vorrichtung nach einem der vorhergehenden Ansprüche, dadurch gekennzeichnet, daß die Erkennungseinrichtung eine elektronische Einrichtung zum Integrieren empfangener zurückgestreuter Photonen aufweist, die eine Zeitkonstante in der Größenordnung mehrerer Hundert Nanosekunden oder einer Mikrosekunde haben.

19. Verwendung der Vorrichtung der Vorrichtung nach der Ansprüche zum Erkennen und Lokalisieren von Waldbrandschwaden.

## Claims

1. A telemetry device for the detection and the location of backscattering objets or substances, comprising :
- a laser source (1,101) for the emission of a laser beam,
- means of detection (2,102) of a backscattered beam received, and,
- optical means (3,103) comprising a steerable reflection head (4,104) providing the steering in azimuth and in elevation of the beam emitted (19,153), and the deflection of the beam received (16,116) onto said means of detection (2,102), said steerable head (4,104) comprising, integral with each other, a main mirror (17,117) for the reception of the backscattered beam, and a secondary mirror (18,118) for the steering in azimuth and in elevation of the beam emitted said secondary mirror having small dimensions with respect to the main mirror, characterized in that said secondary mirror (18,118) is located onto the laser beam at the output of the source without the provision of a diverting increasing optical means or beam broadening means and in that it is not deteriorate by emitting beams having an energy density of 100 MW/cm² and having a hight reflection coefficient at the wavelength of the laser source (1,101).

2. The device according to claim 1, characterized in that the secondary mirror (18,118) is in a multi-layer dielectric material.

3. The device according to any one of the preceding claims, characterized in that the optical means (3,103) comprise means which direct the beam emitted;by the laser source (1,101) onto the secondary mirror (18,118) and which direct the backscattered beam received by the main mirror (17,117) onto the means of detection (2,102), and in that these means are arranged and dimensioned in such a way that, if a fraction of the emitted beam is backscattered along its optical path before having covered a distance sufficient for its energy density to be sufficiently weak as to be no longer harmful for the detector means (2,102), this fraction cannot be directed onto said detector means (2,102).

4. The device according to any one of the preceding claims, characterized in that the laser source emits beams of a wavelength greater than 1,4 µm, especially a wavelength equal to 1,54 µm.

5. The device according to any one of the preceding claims, characterized in that the optical means (3,103) comprise an optical element or optical elements (20 ; 150, 151, 154) providing the bending of the beams emitted by the laser source (2,102) onto the reflection head (4,104), which are elements of small dimensions compared to those of the main mirror (17,117) and in materials able to withstand emitted beams with a high energy density.

6. The device according to the preceding claim, characterized in that the optical element or elements (20 ; 150, 151, 154) providing the bending of the beam emitted by the laser source (1,101) onto the secondary mirror (18,118) are mirrors made in a material similar to that of the secondary mirror (18,118) of the reflection head (4,104).

7. The device according to any one of the preceding claims, characterized in that it comprises a support part, with respect to which the reflection head (4,104) is mounted pivotally around an axis intended to be substantially vertical when said device is in operating position, said head being associated with motor means driving it pivotally, in such a way as to permit the emitted beams to effect a panoramic scanning around said axis.

8. The device according to the preceding claim, characterized in that the reflection head (4,104) is also able to tilt around an axis of said support part intended to be substantially horizontal when said device is in operating position, in such a way as to permit the emitted beam to effect a scanning in elevation with respect to a skyline.

9. The device according to any one of claims 7 or 8, characterized in that the laser source (1,101) and/or the means of detection (2,102) are fixed with respect to the support part of said device with respect to which the reflection head (4,104) is mounted movably.

10. The device according to any one of the preceding claims, characterized in that the optical means (3,103) comprise a telescope (10,110) of the Cassegrain type intended to provide the directing of the backscattered beam received from the reflection head (4,104) onto the means of detection (2,102).

11. The device according to any one of the preceding claims, characterized in that the main mirror (17) and the secondary mirror (18) are substantially coaxial.

12. The device according to any one of the preceding claims, characterized in that the optical means (3,103) comprise a mirror (20) for reflecting the beam emitted by the laser source (1,101) onto the secondary mirror (18), said reflecting mirror (20) being of dimensions greater than the dimensions of the laser beam emitted.

13. The device according to the claims 4 and 12, taken in combination, characterized in that the dimensions of a reflecting mirror (20) are such that, if a fraction of the emitted beam is backscattered beyond said mirror (20) before having covered, on its optical path, a distance sufficient for its energy density to be sufficiently weak as to be no longer harmful for the detector means (2), this fraction is stopped by said mirror (20) if it finds itself directed towards the detector means.

14. The device according to claim 9 taken alone or in combination with any one of the preceding claims, characterized in that the telescope (10) is fixed with respect to the support part of said device.

15. The device according to claim 14, characterized in that the reflection head is mounted on an azimuthal mounting (8) which is able to pivot with respect to the axis of the telescope (10).

16. The device according to any one of the preceding claims, characterized in that the secondary mirror (118) is mounted off-center with respect to the main mirror (117).

17. The device according to the preceding claim, characterized in that the reception and emission surfaces of the reflection head (104) have no intersection.

18. The device according to any one of the preceding claims, characterized in that the means of detection comprise electronic means of integration of the backscattered photons received which have a time constant of the order of several hundreds of nanoseconds or of a microsecond.

19. The utilization of the device according to the claims for the detection and the location of forest fire fumes.
